# EUROPEAN PATENT APPLICATION

(11) **EP 3 678 081 A1**
(43) Date of publication of application: **08.07.2020**
(21) Application number: 17923952.0
(22) Date of filing: 30.08.2017
(51) Int. Cl.: G06Q 20/40

(54) **PAYMENT SYSTEM, PAYMENT METHOD, AND PROGRAM**

(71) Applicant: Rakuten, Inc., Tokyo 158-0094 (JP)
(72) Inventor: AKASHIKA, Hideki, Tokyo 158-0094 (JP); KIMURA, Tsuyoshi, Tokyo 158-0094 (JP)
(74) Representative: EIP
(86) International application number: PCT/JP2017/031061
(87) International publication number: WO 2019/043809

(57) **Abstract**

To prevent an erroneous payment, a server (20) of a payment system (S) includes storing means (200) for storing each of a plurality of pieces of shop identification information in association with authentication information that is necessary for a payment. A customer terminal (10) includes shop receiving means (100) for receiving a selection of a payee shop by the customer, authentication information receiving means (103) for receiving an input of the authentication information by the payee shop, and sending means (104) for sending shop identification information of the payee shop and the authentication information entered by the payee shop to the server (20). The server (20) further includes authentication means (201) for executing authentication processing based on authentication information received from the customer terminal (10) and authentication information stored in association with the shop identification information received from the customer terminal (10). The payment system (S) includes payment execution means (202) for executing payment processing to the payee shop based on an authentication result of the authentication means (201).

## Description

### Technical Field

The present invention relates to a payment system, a payment method, and a program.

### Background Art

A payment system has been considered in which customers operate their terminals, such as smartphones and tablet terminals, to process payments to shops. For example, Patent Literature 1 describes a system in which, when a customer brings the customer terminal near an authentication device, authentication is performed between the customer terminal and the authentication device, and, when the authentication is successful (when the authentication gets succeeded), the payment processing is performed. For example, Patent Literature 2 describes a system in which display information is sequentially displayed on the display part of the customer terminal and the reader reads the display information, and the authentication is thereby performed between the customer terminal and the reader, and, when the authentication is successful, the payment processing is performed.

### Citation List

### Patent Literature

1. JP2007-116456A
2. JP2016-136665A

### Summary of Invention

### Technical Problem

However, in the techniques of Patent Literatures 1 and 2, the customer needs to bring their customer terminal close to the authentication device or the reader, and thus a place in which the customer executes the payment processing is limited. In this regard, it can be considered to display a list of shops on the customer terminal, and perform the payment processing on a payee shop selected from the list, thereby allowing the customer to pay at any place. In this case, however, there is a possibility that the customer may select a payee shop in error and make an erroneous payment.

One or more embodiments of the present invention have been conceived in view of the above, and an object thereof is to prevent an erroneous payment.

### Solution to Problem

In order to solve the above described problems, a payment system according to the present invention includes a customer terminal operated by a customer and a server. The server includes storing means for storing each of a plurality of pieces of shop identification information in association with authentication information that is necessary for a payment. The customer terminal includes shop receiving means for receiving a selection of a payee shop by the customer, authentication information receiving means for receiving an input of the authentication information by the payee shop, and sending means for sending shop identification information of the payee shop and the authentication information entered by the payee shop to the server. The server further includes authentication means for executing authentication processing based on authentication information received from the customer terminal and authentication information stored in association with the shop identification information received from the customer terminal. The payment system includes payment execution means for executing payment processing to the payee shop based on an authentication result of the authentication means.

A payment method according to the present invention is a method based on a customer terminal operated by a customer and a server. The method includes a shop receiving step of receiving, by the customer terminal, a selection of a payee shop by the customer, an authentication information receiving step of receiving, by the customer terminal, an input of the authentication information by the payee shop, a sending step of sending shop identification information of the payee shop and the authentication information entered by the payee shop to the server, an authentication step of executing authentication processing based on authentication information received from the customer terminal and authentication information stored in association with the shop identification information received from the customer terminal, and a payment execution step of executing payment processing to the payee shop based on an authentication result of the authentication step.

A program according to the present invention that causes a customer terminal or other computer to function as payment execution means for executing payment processing to a payee shop based on an authentication result of authentication processing, the authentication processing being based on authentication information stored in association with shop identification information of the payee shop selected by a customer on a customer terminal and authentication information entered by the payee shop in the customer terminal.

In one aspect of the present invention, the customer terminal further includes display control means for, when the customer selects the payee shop, displaying a message, on display means, to prompt the payee shop to enter the authentication information on display means, and when the message is displayed, the authentication information receiving means receives the input of the authentication information by the payee shop.

In one aspect of the present invention, the customer terminal further includes display control means for, when the customer selects the payee shop, displaying payee shop information indicating the payee shop on display means, and the authentication information receiving means receives the input of the authentication information by the payee shop while the payee shop information being displayed.

In one aspect of the present invention, the customer terminal further includes payment amount receiving means for receiving an input of a payment amount by the customer and display control means for displaying, on display means, the payment amount entered by the customer. The authentication information receiving means receives the input of the authentication information by the payee shop while the payment amount being displayed. The payment processing is processing for paying the payment amount entered by the customer to the payee shop selected by the customer.

In one aspect of the present invention, the customer terminal further includes payment amount receiving means for receiving an input of a payment amount by the customer and an input of a payment amount by the payee shop. The payment system further includes determining means for determining whether the payment amount entered by the customer is matched with the payment amount entered by the payee shop. The payment execution means executes the payment processing further based on a determination result of the determining means.

In one aspect of the present invention, the payment system further includes a shop terminal of each shop. The shop terminal of each shop and the server share authentication information of the shop by a first network. The sending means of the customer terminal sends the shop identification information and the authentication information entered by the payee shop by a second network that is different from the first network.

In one aspect of the present invention, the customer terminal further includes payment amount receiving means for receiving an input of a payment amount by the customer. The sending means of the customer terminal further sends the payment amount entered by the customer to the server. The payment system further includes a shop terminal of each shop. The shop terminal of each shop includes payment amount receiving means for receiving an input of a payment amount by the shop, authentication information receiving means for receiving an input of the authentication information by the shop, and sending means for sending the payment amount and the authentication information each entered by the shop to the server. The storing means of the server stores authentication information and a payment amount, which are received from the shop terminal of each shop, in association with shop identification information of the shop. The authentication means of the server executes authentication processing based on authentication information received from the customer terminal and authentication information stored in association with shop identification information and a payment amount that are received from the customer terminal.

In one aspect of the present invention, the server further includes encrypting means for encrypting authentication information entered by a shop using a payment amount entered by the shop as a cryptographic key. The storing means of the server stores the authentication information encrypted by the encrypting means. The authentication means of the server executes authentication processing by decoding the authentication information stored in association with shop identification information and the payment amount that are received from the customer terminal based on the payment amount.

In one aspect of the present invention, each shop has an electronic stamp indicating authentication information of the shop. The customer terminal includes a touch panel. The authentication information receiving means receives an input of the authentication information by a contact between an electronic stamp of the payee shop and the touch panel.

In one aspect of the present invention, the server further includes issuing means for issuing authentication information of each shop and sending means for sending authentication information issued by the issuing means to each shop.

### Advantageous Effects of Invention

According to the present invention, it is possible to prevent an erroneous payment.

### Brief Description of the Drawings

FIG. 1 is a diagram illustrating a hardware configuration of a payment system;
FIG. 2 is a diagram of screen transitions after an application is activated;
FIG. 3 is a diagram of screen transitions after an application is activated;
FIG. 4 is a functional block diagram showing an example of functions implemented in the payment system;
FIG. 5 is a diagram illustrating an example of a shop database;
FIG. 6 is a diagram illustrating an example of a customer database;
FIG. 7 is a flow chart showing an example of processing executed in the payment system;
FIG. 8 is a flow chart showing an example of processing executed in the payment system;
FIG. 9 is a functional block diagram of a variation; and
FIG. 10 is a diagram of screen transitions illustrating processing in variation (1).

### Description of Embodiments

### [1. Hardware configuration of payment system]

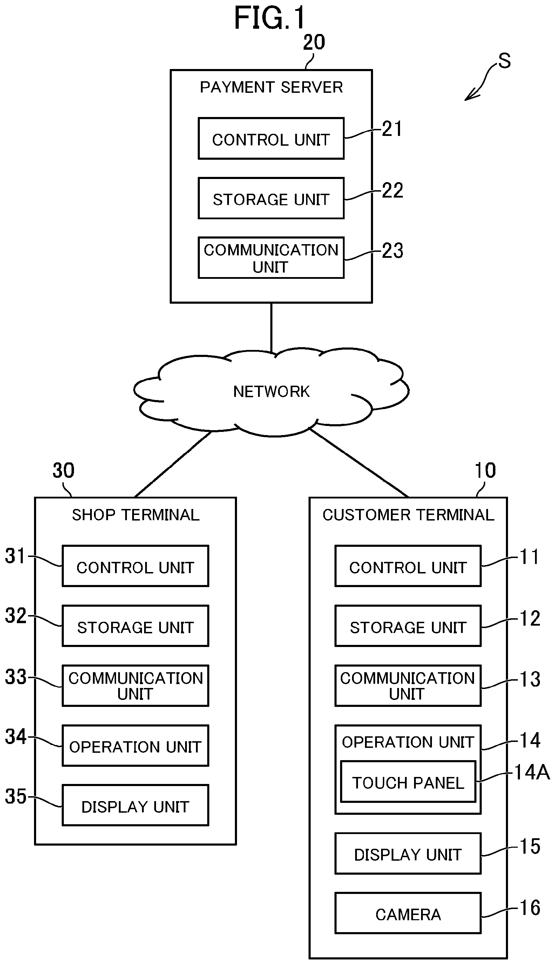

An embodiment of the payment system according to the present invention will be described below. FIG. 1 is a diagram illustrating a hardware configuration of the payment system. As shown in FIG. 1, the payment system S includes a customer terminal 10, a payment server 20, and a shop terminal 30, which are connectable to a network, such as the Internet. FIG. 1 shows one customer terminal 10, one payment server 20, and one shop terminal 30, although the number of each of them may be two or more.

The customer terminal 10 is a computer operated by a customer, such as, a mobile phone (including a smartphone), a mobile information terminal (including a tablet computer), and a laptop personal computer. For example, the customer terminal 10 may be a portable terminal. The portable terminal means a terminal that can be carried out, and, for example, a terminal in a hand-held size. The portable customer terminal 10 includes a battery, and can operate without a connection to a power cable.

The customer terminal 10 includes a control unit 11, a storage unit 12, a communication unit 13, an operation unit 14, a display unit 15, and a camera 16. The control unit 11 includes at least one microprocessor. The control unit 11 executes processing in accordance with programs and data stored in the storage unit 12. The storage unit 12 includes a main storage unit and an auxiliary storage unit. For example, the main storage unit is a volatile memory such as a RAM, and the auxiliary storage unit is a nonvolatile memory such as a ROM, an EEPROM, a flash memory, and a hard disk. The communication unit 13 is a wired or wireless communication interface for data communications through a network.

The operation unit 14 is an input device for a user to operate the terminal, and includes, for example, a touch panel 14A. The touch panel 14A may adopt various types of touch panels, such as a capacitive touch panel and a resistive film touch panel. For example, the operation unit 14 may include a pointing device such as a mouse, and a keyboard or a button. The operation unit 14 transmits an operation to the control unit 11. The display unit 15 is, for example, a liquid crystal display unit or an organic EL display unit. The display unit 15 displays a screen based on instructions from the control unit 11. The camera 16 includes, for example, a CMOS image sensor or a CCD image sensor, and captures a still image or video.

The payment server 20 is a server computer. The payment server 20 includes a control unit 21, a storage unit 22, and a communication unit 23. The physical arrangement of the control unit 21, the storage unit 22, and the communication unit 23 may be the same as that of the control unit 11, the storage unit 12, and the communication unit 13.

The shop terminal 30 is a computer that is used at a shop or a salesperson's house, such as, a mobile phone (including a smartphone), a mobile information terminal (including a tablet computer), a POS terminal, and a personal computer. The shop terminal 30 includes a control unit 31, a storage unit 32, a communication unit 33, an operation unit 34, and a display unit 35. The physical arrangement of these units may be the same as that of the control unit 11, the storage unit 12, the communication unit 13, the operation unit 14, and the display unit 15. The shop may be a shop located at a fixed place such as a restaurant and a merchandise outlet, a mobile type shop such as a food wagon and an automobile, or a shop of a flea market exhibitor.

The programs and data described as being stored in the storage units 12, 22, and 32 may be provided through a network. The hardware configurations of the computers described above are not limited to the above examples, and various types of hardware can be applied. For example, the hardware may include a reader (e.g., optical disc drive, memory card slot) for reading a computer-readable information storage medium, and an input/output unit (e.g., USB port) for inputting/outputting data to/from external devices. For example, programs and data stored in an information storage medium may be provided to the computers through the reader or the input/output unit.

### [2. Overview of payment system]

In this embodiment, a case will be described as an example in which a customer selects a payee shop and enters a payment amount in the customer terminal 10, and a payment to a shop is thereby made. In the following, such a payment method is referred to as a self-payment. When a customer makes a payment by the self-payment, the customer activates a dedicated application on the customer terminal 10.

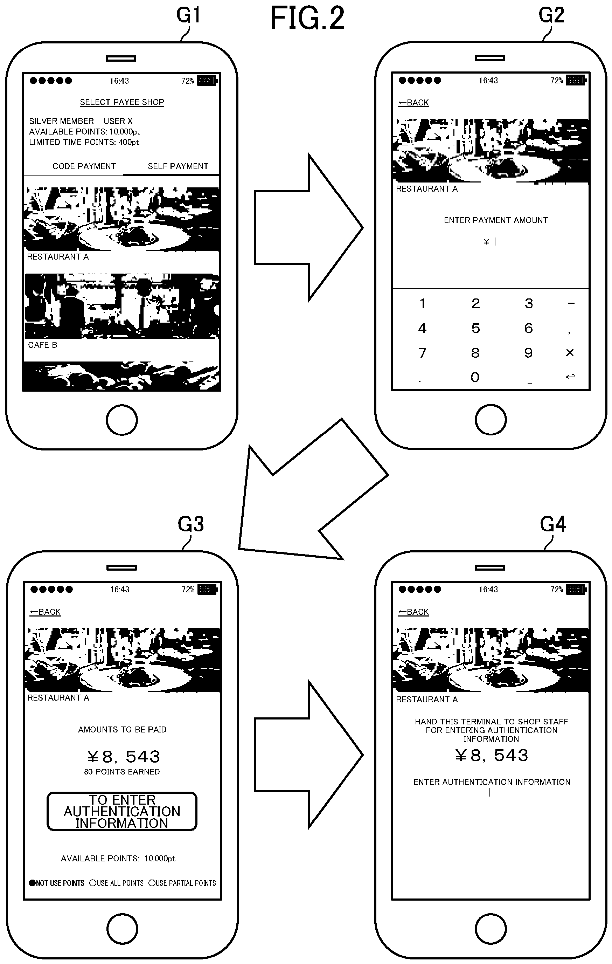

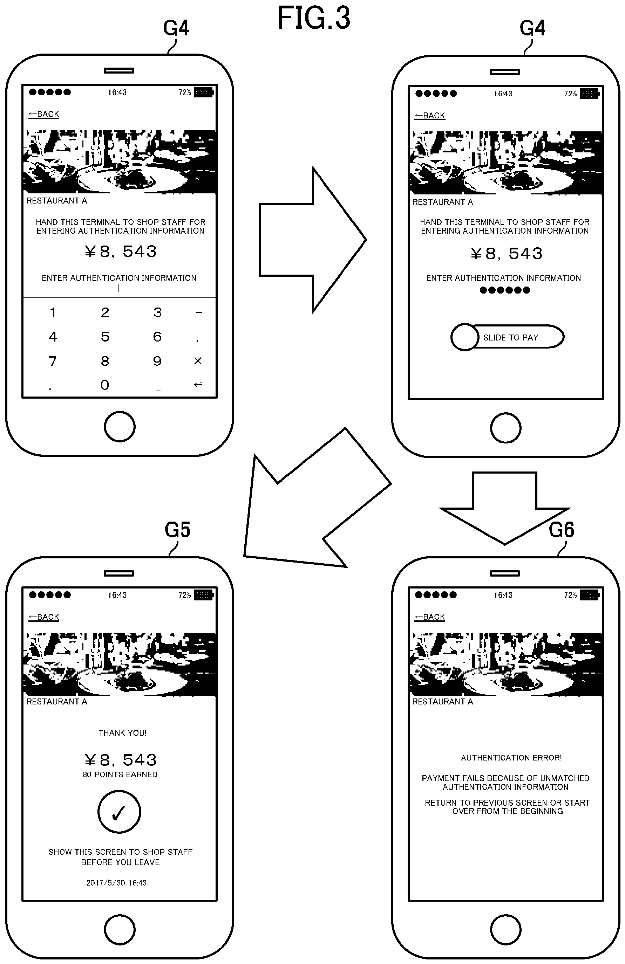

FIGs. 2 and 3 are diagrams of screen transitions after the application is activated. As shown in FIG. 2, once the application is activated, a shop selection screen G1 for selecting a payee shop is displayed on the display unit 15. For example, shops for which the self-payment is available may be registered in the payment server 20 in advance, and the shop selection screen G1 may display a list of the shops.

The shop selection screen G1 displays a plurality of shops that are scrollable. For example, all of the shops registered in the payment server 20 may be displayable, or some of the shops may be displayable. When only some of the shops are displayable, only the shops close to customer terminal 10 may be displayable. In this case, the customer may enter an address of a present location, or, if the customer terminal 10 includes a GPS sensor, nearby shops may be specified using latitude/longitude information detected by the GPS sensor.

When the customer selects a payee shop on the shop selection screen G1, the screen is transitioned to an amount input screen G2 for entering a payment amount. The amount that can be entered in the amount input screen G2 may not be limited, or have at least one of the lowest value and the highest value. The customer operates the operation unit 14 to enter a payment amount.

When the customer enters a payment amount in the amount input screen G2, the screen is transitioned to a confirmation screen G3 for confirming the payment. As shown in FIG. 2, the confirmation screen G3 displays the payee shop selected by the customer and the payment amount entered by the customer, and also displays a button to jump to a screen in which authentication information required for the payment is to be entered. The authentication information is basically only known to the shop, and secret information that the customer cannot know. When the customer selects the button, the screen is transitioned to an authentication information input screen G4 for the payee shop to enter the authentication information.

The authentication information input screen G4 displays a message to prompt the customer to hand the customer terminal 10 to a salesperson so that the salesperson enters the authentication information. When the authentication information input screen G4 is displayed, the customer hands the customer terminal 10 to the salesperson to ask the salesperson to enter the authentication information. The authentication information input screen G4 also displays the payee shop and the payment amount. As such, the salesperson can enter the authentication information while confirming the payee shop and the payment amount.

Proceeding to FIG. 3, when the salesperson enters the authentication information in the authentication information input screen G4, a predetermined payment start operation can be initiated. The payment start operation may be any predetermined operation, for example, sliding an image displayed on the authentication information input screen G4 in a predetermined direction while touching the image. The payment start operation may be performed by either a user or a salesperson, although here, the user performs the payment start operation. When the user performs the predetermined payment start operation, the customer terminal 10 sends a predetermined payment request to the payment server 20. The payment request includes the payee shop, the payment amount, and the authentication information.

The payment server 20 stores authentication information of each shop in advance, and the payment server 20 performs authentication processing based on the authentication information included in the received payment request. The payment server 20 permits a payment if the authentication is successful, and does not permit a payment if the authentication fails.

For example, if the authentication is successful and the payment is complete, the screen is transitioned to a payment complete screen G5 that notifies of the completion of the payment on the customer terminal 10. The customer shows the payment complete screen G5 to the salesperson when leaving the shop, for example. The salesperson thus confirms that the payment of the customer is complete. A notification similar to the payment complete screen G5 may be displayed on the shop terminal 30. In this case, the salesperson can confirm that the payment of the customer is complete by the notification displayed on the shop terminal 30.

On the other hand, if the authentication fails and the payment is not complete, the screen is transitioned to an error screen G6 for notifying of a failure of the payment. The error screen G6 displays a message indicating that the payment is not complete. If the error screen G6 is displayed, there is a possibility that the user selects a wrong payee shop or the payee shop enters erroneous authentication information. As such, the operation needs to be performed again from the shop selection screen G1 or the authentication information input screen G4.

As described above, in the self-payment of this embodiment, a payee shop is selected by a customer, and authentication information is entered by a shop. In the payment system S, authentication is performed based on authentication information entered by a shop, and thus, it is possible to prevent erroneous payment even if a user selects a wrong shop. This technique will be described in details below.

### [3. Functions implemented in payment system]

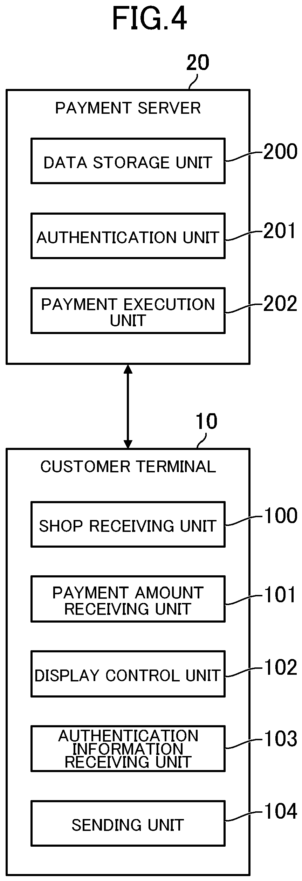

FIG. 4 is a functional block diagram showing an example of functions implemented in the payment system S. Here, a case where the functions implemented by the customer terminal 10 and the payment server 20 will be described.

### [3-1. Functions implemented in customer terminal]

In the customer terminal 10, a shop receiving unit 100, a payment amount receiving unit 101, a display control unit 102, an authentication information receiving unit 103, and a sending unit 104 are implemented. The shop receiving unit 100, the payment amount receiving unit 101, and the authentication information receiving unit 103 are implemented mainly by the control unit 11 and the operation unit 14. The display control unit 102 is implemented mainly by the control unit 11 and the display unit 15. The sending unit 104 is implemented mainly by the control unit 11 and the communication unit 13.

### [Shop receiving unit]

The shop receiving unit 100 receives a selection of a payee shop by a customer. The payee shop is a shop to which the customer makes a payment among a plurality of shops. In other words, the payee shop is a shop that provides the customer with goods or services, and receives the payment from the customer in exchange for the goods or the services. In this embodiment, a list of candidates of payee shops is displayed on the shop selection screen G1, and thus, the shop receiving unit 100 receives a selection of a payee shop from a plurality of shops displayed on the shop selection screen G1. The shop receiving unit 100 may specify the payee shop selected by the customer based on a detection signal of the operation unit 14.

### [Payment amount receiving unit]

The payment amount receiving unit 101 receives an input of a payment amount by a customer. The payment amount is a settlement amount, and an amount that the customer pays to the payee shop. In other words, the payment amount is an amount that the payee shop receives from the customer in exchange for goods or services provided to the customer. The payment amount receiving unit 101 may specify the payment amount entered by the customer based on a detection signal of the operation unit 14.

### [Display control unit]

The display control unit 102 displays various screens on the display unit 15. For example, when a customer selects a payee shop, the display control unit 102 displays a message on the display unit 15 to prompt for an input of authentication information by the payee shop. The message is not limited to the example shown on the authentication information input screen G4 in FIG. 2, but may be a message that can prompt the shop to enter the authentication information. For example, the display control unit 102 may display a message indicative of handing the customer terminal 10 to the payee shop.

The display control unit 102 may display the message on any screen before completion of the payment. In this embodiment, the message is displayed on the authentication information input screen G4. The display control unit 102 may display the message one or more previous screens prior to transitioning to the authentication information input screen G4. The data (e.g., text data, image data) indicating the message may be stored in a data storage unit 200 described later of the payment server 20, or stored in the storage unit 12 of the customer terminal 10.

For example, when the customer selects a payee shop, the display control unit 102 displays payee shop information indicating the payee shop on the display unit 15. The payee shop information may be any information that can identify the payee shop, for example, a character string indicating a name of the payee shop, or an image indicating a name, appearance, interior, goods, or services of the payee shop.

The display control unit 102 may display the payee shop information on any screen displayed before completion of the payment. In this embodiment, the payee shop information is displayed on the amount input screen G2, the confirmation screen G3, and the authentication information input screen G4, for example. The data (e.g., text data, image data) indicating the payee shop information may be stored in a data storage unit 200 described later of the payment server 20, or stored in the storage unit 12 of the customer terminal 10.

For example, the display control unit 102 displays the payment amount entered by the customer on the display unit 15. The display control unit 102 displays a numeric value indicating the payment amount on the display unit 15. The display control unit 102 may display the payment amount on any screen displayed before completion of the payment. In this embodiment, the display control unit 102 displays the payment amount on the confirmation screen G3 and the authentication information input screen G4, for example.

### [Authentication information receiving unit]

The authentication information receiving unit 301 receives input of the authentication information by the payee shop. The authentication information proves the legitimacy of the shop. In other words, the authentication information is necessary for a payment to the shop, and for executing the payment processing. The authentication information may have any format, for example, a passcode (password) format. If the authentication information has a passcode format, for example, the authentication information may be configured only of numerals, only of characters, or a combination of numerals and characters.

For example, if a message prompting an input of the authentication information by the payee shop is displayed, the authentication information receiving unit 301 receives the input of the authentication information by the payee shop. That is, the authentication information receiving unit 301 receives the input of the authentication information after the display control unit 102 displays the message. For example, the authentication information receiving unit 301 may receive the input of the authentication information while the message is displayed on the authentication information input screen G4, or may receive the input of the authentication information on a screen transitioned from the screen displaying the message.

For example, while the payee shop information is displayed, the authentication information receiving unit 301 receives the input of the authentication information by the payee shop. That is, the authentication information receiving unit 301 receives the input of the authentication information on the same screen on which the payee shop information is displayed. In this embodiment, while the payee shop information is displayed on the authentication information input screen G4, the authentication information receiving unit 301 receives the input of the authentication information.

For example, while the payment amount is displayed, the authentication information receiving unit 301 receives the input of the authentication information by the payee shop. That is, the authentication information receiving unit 301 receives the input of the authentication information on the same screen on which the payment amount is displayed. In this embodiment, while the payment amount is displayed on the authentication information input screen G4, the authentication information receiving unit 301 receives the input of the authentication information.

The authentication information is not limited to information such as numerals and characters, but can adopt various types of authentication information used in the authentication technology. For example, the authentication information may be moving a touched position to draw a predetermined trace on the touch panel 14A, or touching a plurality of positions on the touch panel 14A in a predetermined order. For example, the authentication information may be entered by using an image, and may be, for example, a bar code or a two-dimensional bar code. In this case, the authentication information receiving unit 301 may read the authentication information with the camera 16 and a dedicated reader, thereby receiving the input of the authentication information. For example, the biometric authentication may be used, and the authentication information may be a fingerprint, iris, face, vein, or voice of a salesperson at each shop. In this case, the authentication information receiving unit 301 may use the camera 16 or a microphone to receive the input of the authentication information.

### [Sending unit]

The sending unit 104 sends shop identification information of the payee shop and the authentication information entered by the payee shop to the payment server 20. For example, shop identification information of respective shops displayed on the selection screen G1 (i.e., shops that customers can select) is stored in the storage unit 12 of the customer terminal 10. The sending unit 104 sends the shop identification information of the payee shop received by the shop receiving unit 100 to the payment server 20. Regarding the authentication information, the sending unit 104 may send the authentication information received by the authentication information receiving unit 103 with or without encryption. In this embodiment, a user also enters a payment amount, and thus, the sending unit 104 also sends the payment amount entered by the user to the payment server 20. The sending unit 104 may send the payment amount received by the payment amount receiving unit 101 with or without encryption.

### [3-2. Functions implemented in payment server]

In the payment server 20, a data storage unit 200, an authentication unit 201, and a payment execution unit 202 are implemented. The data storage unit 200 is implemented mainly by the storage unit 22, and the authentication unit 201 and the payment execution unit 202 are implemented mainly by the control unit 21.

### [Data storage unit]

The data storage unit 200 stores data required for payment, such as, a shop database and a customer database.

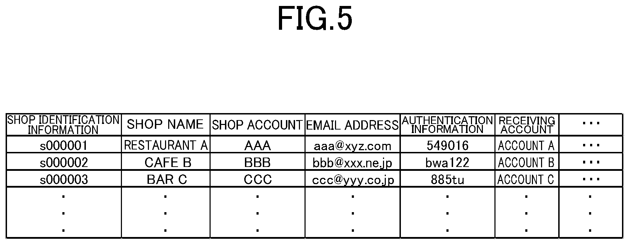

FIG. 5 is an example of the shop database. As shown in FIG. 5, the shop database stores various information about shops. For example, the shop database stores shop names, shop accounts, email addresses, authentication information, and accounts for receiving payments in association with shop identification information for uniquely identifying shops. Here, a case will be described in which ID information issued for each shop corresponds to the shop identification information, although a shop account or an email address may be used for the shop identification information.

The data storage unit 200 stores the shop database, thereby storing a plurality of items of shop identification information and authentication information required for payment in association with one another. Storing information in association with one another means storing items of information to be searchable with one another, and, for example, storing information in the same record in the table. For example, the data storage unit 200 stores authentication information for each shop. In other words, the data storage unit 200 stores authentication information peculiar to each shop.

The authentication information stored in the shop database may be entered in or issued at the shop terminal 30, or entered in or issued at the payment server 20. When the authentication information is entered in the shop terminal 30 or the payment server 20, a shop may freely determine numerals and characters forming the authentication information. When the authentication information is issued at the shop terminal or the payment server 20, the authentication information may be issued according to a predetermined issuance rule. For example, random numerals or characters may be issued as the authentication information, or, the authentication information may be issued by adding random numerals or characters to the numerals or characters identifying the shops.

The information stored in the shop database is not limited to the above example, and other information about the shops may be stored. For example, the shop database may store a password, which is required together with a shop account at the time of login to the payment system S, address, telephone number, shop image, and latitude/longitude information of a shop.

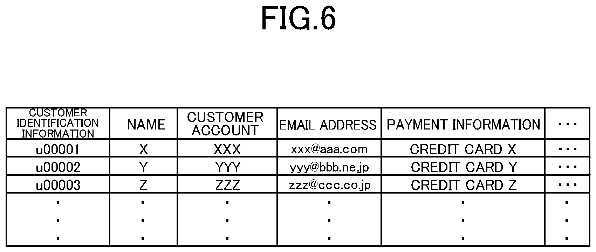

FIG. 6 is a diagram illustrating an example of the customer database. As shown in FIG. 6, the customer database stores various information about customers. For example, the customer database stores customer names, customer accounts, email addresses, and payment information in association with customer identification information for uniquely identifying customers. Here, a case will be described in which ID information issued for each shop corresponds to the customer identification information, although a customer account, e-mail address, or identification information of the customer terminal 10 may be used as the customer identification information.

The payment information is information necessary for payment, such as, a credit card number, a debit card number, and a number of a bank account from which the payment is to be made. The information stored in the customer database is not limited to the above example, and other information about the customers may be stored. For example, the customer database may store a password required at the time of login to the payment system S together with a customer account.

The data stored in the data storage unit 200 is not limited to the above example. For example, the data storage unit 200 may store image data for displaying screens shown in FIGs. 2 and 3.

### [Authentication unit]

The authentication unit 201 performs authentication processing based on the authentication information received from the customer terminal 10 and the authentication information stored in association with the shop identification information received from the customer terminal 10. The authentication unit 201 refers to the customer database, and specifies authentication information associated with the shop identification information of the payee shop selected by the customer. Subsequently, the authentication unit 201 compares the specified authentication information with the authentication information received from the customer terminal 10. If these pieces of information are matched with each other, the authentication unit 201 determines that authentication is successful, and if not, determines that the authentication fails.

"The authentication is successful" means that legitimacy of the payee shop is proven (the shop should receive the payment from the customer), and that the combination of the payee shop selected by the customer and the authentication information entered by the payee shop is correct. On the other hand, "the authentication fails (the authentication gets failed)" means that legitimacy of the payee shop is not proven, and that at least one of the payee shop selected by the customer and the authentication information entered by the payee shop is wrong. In other words, "the authentication is successful" means allowing the payment processing to be executed, and "the authentication fails" means that preventing the payment processing from being executed.

### [Payment execution unit]

The payment execution unit 202 executes payment processing for the payee shop based on an authentication result of the authentication unit 201. In this embodiment, a customer enters a payment amount, and thus, the payment processing is processing for paying the payment amount entered by the customer to the payee shop selected by the customer. The payment execution unit 202 determines whether to execute the payment processing depending on the authentication result of the authentication unit 201.

The payment processing is information processing for making a payment to a shop. The payment processing may adopt known processing, such as, credit card payment processing and processing for deduction from a bank account. In the case of the credit card payment processing, the payment processing is executed by sending an inquiry about a credit check to a server of a credit card company, and, in the case of deduction from a bank account, the payment processing is executed by sending a deduction request to a server of a bank where the customer has an account.

In this embodiment, if the authentication of the authentication unit 201 is successful, the payment execution unit 202 permits execution of the payment processing, and, if the authentication of the authentication unit 201 fails, prevents execution of the payment processing. In other words, the payment execution unit 202 executes the payment processing in response to successful authentication of the authentication unit 201, and does not execute the payment processing if the authentication of the authentication unit 201 fails. In this embodiment, if the authentication of the authentication unit 201 fails, the payment execution unit 202 in no way executes the payment processing without suspending the payment processing or inquiring the shop or the customer.

### [4. Processing executed in this embodiment]

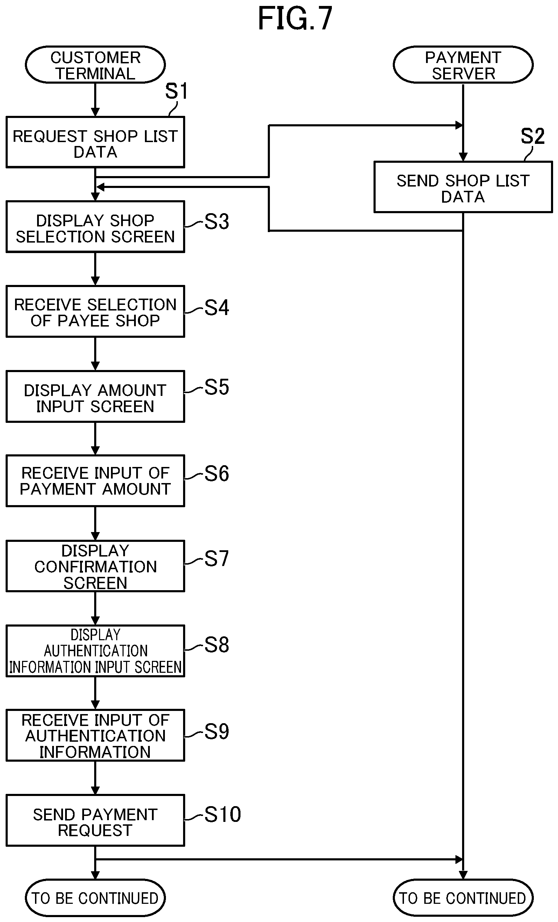

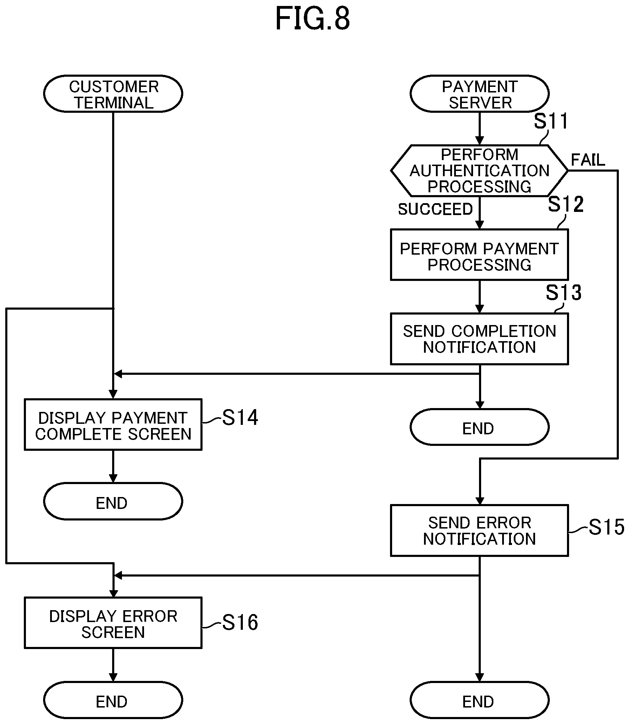

FIGs. 7 and 8 are flow charts showing examples of processing executed in the payment system. The processing shown in FIGs. 7 and 8 is executed when the control units 11 and 21 operate in accordance with the programs respectively stored in the storage units 12 and 22. The processing described below is an example of the processing executed by the functional block shown in FIG. 4.

As shown in 7, in the customer terminal 10, the control unit 11 starts an application stored in the storage unit 12, and requests the payment server 20 for shop list data that shows a list of shops (S1). If the customer terminal 10 communicates with the payment server 20, information for identifying the customer terminal 10 (e.g., IP address, customer identification information, customer account, session ID) is sent to the payment server 20, and the payment server 20 can specify which customer is accessing. After the application is activated, a customer account and a password may be required so as to log in the payment server 20.

When the payment server 20 receives a request for the shop list data, the control unit 21 sends the shop list data to the customer terminal 10 based on the shop database (S2). In S2, the control unit 21 may include information about all of the shops in the shop list data, or may include information about only nearby shops in the shop list data. If information of only the nearby shops is included, at S1, the customer terminal 10 may send position information, such as latitude/longitude information of the customer terminal 10, to the payment server 20. The shop list data includes information for displaying the shop selection screen G1, such as, shop identification information, shop names, and shop images.

When the customer terminal 10 receives the shop list data, the control unit 11 displays the shop selection screen G1 on the display unit 15 based on the shop list data (S3). The control unit 11 receives a selection of a payee shop by the customer based on a detection signal from the operation unit 14 (S4). In S4, the control unit 11 retains shop identification information of the payee shop selected by the customer in the storage unit 12.

The control unit 11 displays the amount input screen G2 on the display unit 15 (S5). The payment server 20 may send data for displaying the amount input screen G2, although here, such data is stored in the storage unit 12 together with the application. This applies to the confirmation screen G3 and the authentication information input screen G4.

The control unit 11 receives an input of a payment amount by the customer based on a detection signal from the operation unit 14 (S6). In S6, the control unit 11 retains, in the storage unit 12, the payment amount entered by the customer. The control unit 11 displays the confirmation screen G3 on the display unit 15 based on the payee shop selected by the customer and the payment amount entered by the customer (S7). Upon detecting that the customer selects a button in the confirmation screen G3 based on the detection signal of the operation unit 14, the control unit 11 displays, on the display unit 15, the authentication information input screen G4 including the payee shop, the payment amount, and a message prompting an input of the payee shop (S8). In S8, when the authentication information input screen G4 is displayed, the customer hands the customer terminal 10 to a salesperson of the payee shop.

The control unit 11 receives the input of authentication information by the payee shop based on a detection signal from the operation unit 14 (S9). In S9, the control unit 11 stores, in the storage unit 12, the authentication information entered by the payee shop. Upon receiving the authentication information and the payment start operation, the control unit 11 sends a payment request to the payment server 20 (S10). The payment request may be in any predetermined data format, and here, includes the shop identification information, the payment amount, and the authentication information stored in the storage unit 12.

Proceeding to FIG. 8, when the payment server 20 receives the payment request, the control unit 21 executes the authentication processing based on the payment request and the shop database (S11). In S11, the control unit 21 specifies, in the shop database, the authentication information associated with the shop identification information included in the payment request. The control unit 21 determines whether the specified authentication information is matched with the authentication information included in the payment request.

If the authentication is successful (S11; success), the control unit 21 executes the payment processing based on the shop database and the customer database (S12), and sends a predetermined completion notification to the shop terminal 30 and the customer terminal 10 (S13). In S12, the control unit 21 refers to the shop database to obtain payment destination information, and refers to the customer database to obtain credit card information of the customer. The control unit 21 then executes the credit card payment processing for paying the payment amount indicated by the payment request. The completion notification sent in S13 includes the content of the completed payment.

When the customer terminal 10 receives the completion notification, the control unit 11 displays the payment complete screen G5 on the display unit 15 (S14). Subsequently, the customer shows the payment complete screen G5 to the salesperson and leaves the shop. If the shop terminal 30 also receives the completion notification, the salesperson can recognize the completion notification on the shop terminal 30.

On the other hand, if the authentication fails in S11 (S11; failure), the control unit 21 does not execute the payment processing, and sends a predetermined error notification to the customer terminal 10 (S15). When the customer terminal 10 receives the error notification, the control unit 11 displays the error screen G6 including a predetermined error message on the display unit 15 (S16). Subsequently, the operation is performed again by the customer or the payee shop.

According to the payment system S described above, even in the self-payment in which the customer selects a payee shop by himself/herself, the authentication processing is executed based on the authentication information entered by the payee shop, and the payment processing is executed if the authentication is successful. This can prevent erroneous payment. That is, if the customer selects a payee shop in error, the authentication information does not match and the payment processing is not executed. This serves to prevent a payment to the payee shop selected in error. For example, when only the nearby shops are selectable by using the position information of the customer terminal 10, some shops having similar names, such as franchise stores, may be located in one area, and thus a customer may possibly select a payee shop in error. Such an error can be surely prevented by the use of the authentication information. Further, a case can be considered in which a small amount of payment is remotely and repeatedly made for the purpose of mischief or harassment to a shop. In such a case, the payment processing is not executed by the authentication information unknown to the customer, and thus it is possible to prevent the mischief or the harassment.

The message prompting the payee shop to enter the authentication information is displayed on the authentication information input screen G4, and this serves to smoothly perform the operation until the completion of the payment.

The authentication information input screen G4 displays the payee shop information, and thus, the payee shop can enter the authentication information while viewing the payee shop selected by the customer. As such, if the customer selects a payee shop in error, the payee shop can visibly confirm the selected shop, and thus can notice the erroneous selection before executing the payment processing. If the erroneous selection can be found before the payment processing is executed, it is possible to save time and effort for cancelling the erroneous payment after the payment is executed.

The authentication information input screen G4 displays the payment amount, and thus, the payee shop can enter the authentication information while viewing the payment amount entered by the customer. As such, if the customer enters a payment amount in error, the payee shop can visibly confirm the entered amount, and thus can notice the erroneous input before executing the payment processing. If the erroneous input can be found before the payment processing is executed, it is possible to save time and effort for cancelling the erroneous payment after the payment is executed.

### [5. Variations]

The present invention is not to be limited to the above described embodiment. The present invention can be changed as appropriate without departing from the spirit of the invention.

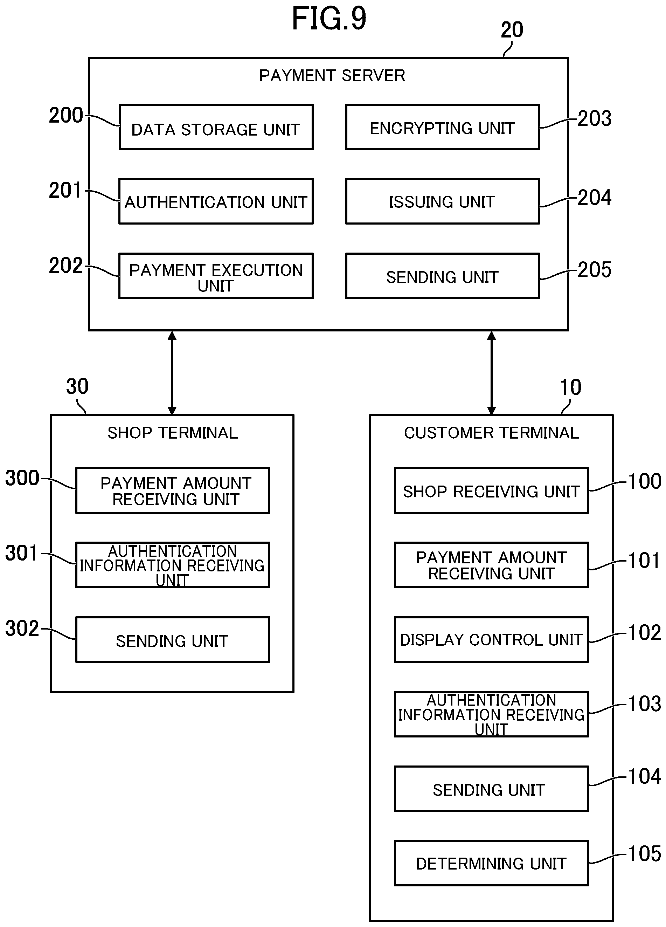

FIG. 9 is a functional block diagram of a variation. As shown in FIG. 9, in the variation described below, a determining unit 105, an encrypting unit 203, an issuing unit 204, a sending unit 205, a payment amount receiving unit 300, an authentication information receiving unit 301, and a sending unit 302 are implemented in addition to the functions described in the embodiment.
(1) For example, there is a possibility that a customer enters an erroneous payment amount. As such, the payee shop may also enter the payment amount in the customer terminal 10 so that the payment processing is executed when the payment amount entered by the customer is matched with the payment amount entered by the payee shop.

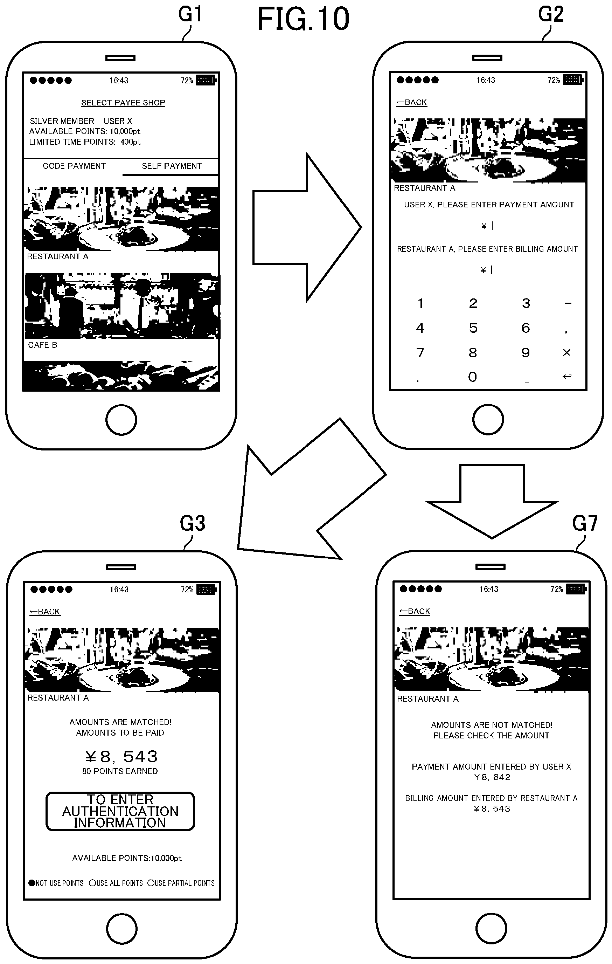

   FIG. 10 is a diagram of screen transitions illustrating processing in the variation (1). As shown in FIG. 10, when the customer selects the payee shop on the shop selection screen G1, the screen is transitioned to the amount input screen G2. This is the same as the embodiment. The amount input screen G2 of this variation includes a first input form for receiving an input of a payment amount by the customer and a second input form for receiving an input of a payment amount by the payee shop.
   The payment amount receiving unit 101 of this variation receives the input of the payment amount by the customer and the input of the payment amount by the payee shop. The payment amount receiving unit 101 may specify the payment amount entered by the customer and the payment amount entered by the payee shop based on a detection signal of the operation unit 14. The customer enters a payment amount in the first input form, and then hands the customer terminal 10 to the payee shop so that the payee shop enters a payment amount in the second input form. If the payment amount entered by the customer is matched with the payment amount entered by the payee shop, the screen is transitioned to the confirmation screen G3. If they are not matched with each other, the screen is not transitioned to the confirmation screen G3 but to the error screen G7.
   The payment system S of this variation includes the determining unit 105. Here, a case will be described in which the determining unit 105 is implemented by the customer terminal 10. The determining unit 105 is implemented mainly by the control unit 11. The determining unit 105 determines whether the payment amount entered by the customer is matched with the payment amount entered by the payee shop. When the payee shop enters the payment amount in the second input form, the determining unit 105 determines whether the payment amount entered in the first input form is matched with the payment amount entered in the second input form.
   For example, the sending unit 104 of the customer terminal 10 may determine whether to send a payment request based on a determination result of the determining unit 105. That is, if the determining unit 105 determines that the amounts are matched, the sending unit 104 may send a payment request to the payment server 20, and if the determining unit 105 determines that the amounts are not matched, the sending unit 104 may not send a payment request to the payment server 20.
   The payment execution unit 202 executes the payment processing further based on the determination result of the determining unit 105. For example, when the sending unit 104 determines whether to send a payment request based on the determination result of the determining unit 105, if the payment server 20 receives the payment request, it means that the determining unit 105 determines that the amounts are matched. If the payment server 20 does not receive the payment request, it means that the determining unit 105 determines that the amounts are not matched. As such, the payment execution unit 202 executes the payment processing if the payment execution unit 202 receives the payment request, and does not execute the payment processing if the payment execution unit 202 does not receive the payment request.
   The sending unit 104 may send a payment request to the payment server 20 regardless of the determination result of the determining unit 105. In this case, the payment request includes information indicating the determination result of the determining unit 105. The payment execution unit 202 may specify the determination result of the determining unit 105, which is indicated by the information included in the received payment request, and determine whether to execute the payment processing. That is, the payment execution unit 202 executes the payment processing if the payment execution unit 202 specifies that determining unit 105 determines the amounts are matched, and does not execute the payment processing if the payment execution unit 202 specifies that determining unit 105 determines the amounts are not matched.
   The determining unit 105 may be implemented by the payment server 20. In this case, a payment request includes a payment amount entered by a customer and a payment amount entered by a payee shop. The determining unit 105 of the payment server 20 determines that the payment amounts included in the payment request are matched with each other.
   According to the variation (1), the payment processing is executed based on the determination result of whether the payment amount entered by the customer is matched with the payment amount entered by the payee shop. As such, even though the customer enters an erroneous payment amount, it is possible to prevent the payment processing from being executed in the erroneous payment amount if the payee shop enters a correct payment amount.
(2) For example, authentication information of a shop needs to be shared between the shop terminal 30 of the shop and the payment server 20 in advance. In this regard, a network sharing the authentication information between the shop terminal 30 and the payment server 20 may be different from a network for sending the authentication information from the customer terminal 10 to the payment server 20.
   A shop terminal 30 of a shop and the payment server 20 share authentication information of the shop by a first network. If the authentication information is entered in or issued at the payment server 20, the payment server 20 sends the authentication information to the shop terminal 30 via the first network, thereby sharing the authentication information. On the other hand, if the authentication information is entered in or issued at the shop terminal 30, the shop terminal 30 sends the authentication information to the payment server 20 via the first network, thereby sharing the authentication information.
   The sending unit 205 of the customer terminal 10 sends the shop identification information and the authentication information entered by the payee shop via a second network, which is different from the first network. The second network may be a network of a different type from the first network. For example, the first network is VPN or LAN, and the second network is the Internet. For example, the first network is a communication network using WiFi, and the second network is a communication network using a SIM card. For example, the first network is a wired network, and the second network is a wireless network. For example, the first network is a network using a first provider, and the second network is a network using a second provider.
   According to the variation (2), the network for sharing the authentication information between the shop terminal 30 and the payment server 20 is different from the network used when the customer terminal 10 sends the authentication information to the payment server 20, and thus, it is possible to prevent the authentication information from being leaked, and to improve security.
(3) For example, when the customer makes a payment, the payee shop may enter a payment amount and authentication information in the shop terminal 30 so that the payment server 20 stores a combination of the payment amount and the authentication information. The payment server 20 may determine whether the combination of the payment amount and the authentication information received from the shop terminal 30 of the payee shop is matched with the combination of the payment amount and the authentication information received from the customer terminal 10, and when the combinations are matched, the payment processing may be executed.
   A shop terminal 30 of each shop in this variation includes a payment amount receiving unit 300, an authentication information receiving unit 301, and a sending unit 302. These functions are implemented mainly by the control unit 31.
   A payment amount receiving unit 300 of a shop terminal 30 of a shop receives a payment amount from the shop. For example, an input form of a payment amount is displayed on a display unit 35 of the shop terminal 30, and the payment amount receiving unit 300 receives an input to the input form. The payment amount receiving unit 300 may specify the payment amount entered by the shop based on a detection signal of the operation unit 34.
   An authentication information receiving unit 301 of a shop terminal 30 of a shop receives an input of authentication information from the shop. For example, an input form of authentication information is displayed on the display unit 35 of the shop terminal 30, and the authentication information receiving unit 301 receives an input to the input form. The authentication information receiving unit 301 may specify the payment amount entered by the shop based on a detection signal of the operation unit 34. If the biometric authentication is used for the authentication information, a camera, a microphone, or a dedicated reader may be provided to the shop terminal 30, and the authentication information receiving unit 301 may specify the authentication information such as a fingerprint, iris, face, vein, or voice based on a detection signal of the camera, the microphone, or the dedicated reader.
   A sending unit 302 of a shop terminal 30 of a shop sends a payment amount and authentication information entered by the shop to the payment server 20. The sending unit 302 sends information for identifying the shop or the shop terminal 30 (e.g., shop identification information, shop account, e-mail address, IP address) with the payment amount received by the payment amount receiving unit 300 and the authentication information received by the authentication information receiving unit 301.
   The data storage unit 200 of the payment server 20 stores authentication information and a payment amount received from a shop terminal 30 of a shop in association with shop identification information of the shop. Upon receiving the payment amount and the authentication information from the shop terminal 30, the payment server 20 specifies the shop identification information of the shop terminal 30, and stores the payment amount and the authentication information in association with the shop identification information in the shop database.
   The authentication unit 201 of this variation executes authentication processing based on the authentication information received from the customer terminal 10 and the authentication information stored in association with the shop identification information and the payment amount received from the customer terminal 10. The authentication unit 201 refers to the shop database, and specifies the authentication information that is associated with both the shop identification information and the payment amount by the customer terminal 10. Subsequently, the authentication unit 201 determines whether the specified authentication information is matched with the authentication information received from the customer terminal 10.
   According to the variation (3), the authentication processing is executed based on the combination of the payment amount and the authentication information entered by the payee shop, and thus, authentication information can be changed for each payment of the customer. This can more surely prevent an erroneous payment. Further, the payee shop enters a combination of a payment amount and authentication information for each payment, and this can be used as a one-time password, and improve the security.
(4) For example, in the variation (3), the payment server 20 may encrypt authentication information corresponding to a payment amount, and store the authentication information using the payment amount as a key.
   The payment server 20 of this variation includes an encrypting unit 203. The encrypting unit 203 is implemented mainly by the control unit 21. The encrypting unit 203 uses a payment amount entered by a shop as a cryptographic key to encrypt authentication information entered by the shop. The encryption may adopt various known encrypting methods. For example, the payment amount may be used as a cryptographic key in common key cryptography, or as a secret key in public key cryptography.
   The data storage unit 200 of the payment server 20 stores the authentication information encrypted by the encrypting unit 203. That is, the authentication information is stored in the data storage unit 200 while being encrypted by the encrypting unit 203.
   The authentication unit 201 decodes the authentication information stored in association with the shop identification information and a payment amount received from the customer terminal 10 based on the payment amount, and executes the authentication processing. Upon receiving a payment request from the customer terminal 10, the authentication unit 201 tries to decode the authentication information, which is stored in the data storage unit 200 while being encrypted, using the payment amount included in the payment request as a decoding key.
   When the decryption fails, the authentication unit 201 determines that the authentication fails. If the decryption is successful and the decoded authentication information is matched with the authentication information received from the customer terminal 10, the authentication unit 201 determines that the authentication is successful. As such, even if the decryption is successful, the authentication unit 201 determines that the authentication fails if the decoded authentication information is not matched with the authentication information received from the customer terminal 10.
   According to the variation (4), if a customer enters an erroneous payment amount, authentication information cannot be decoded and the payment processing is not executed. This can more surely prevent an erroneous payment. Further, the authentication information is stored while being encrypted, which serves to improve the security.
(5) For example, the method for inputting the authentication information is not limited to the example described in the embodiment. It is possible to adopt various methods in which information can be entered in the customer terminal 10. For example, an electronic stamp may be used. The electronic stamp is a technology for inputting information by directly pressing a stamp on a smartphone or a tablet terminal. For example, with an electronic stamp, information can be entered by using a multi-touch function of the touch panel 14A to identify a contact pattern of the stamp itself. The contact pattern is a pattern of positional relationship between touched positions.
   A shop has an electronic stamp indicating authentication information of the shop. For example, an electronic stamp of a shop includes a contact pattern that identifies authentication information of the shop. The authentication information receiving unit 301 of the customer terminal 10 receives an input of the authentication information by contact between the electronic stamp of the payee shop and the touch panel.
   The data storage unit 200 of the payment server 20 stores the contact pattern as the authentication information. The authentication unit 201 determines whether the contact pattern received from the customer terminal 10 is matched with the contact pattern stored in the data storage unit 200, thereby executing the authentication processing.
   According to the variation (5), the authentication information is entered by using the electronic stamp, and thus, operations of the payee shop can be simplified. Further, a customer can enter authentication information without handing his/her customer terminal to others. This can reduce psychological resistance when the customer utilizes the payment system S. Further, using an electronic stamp, with which authentication information is difficult to decipher, can improve the security.
(6) For example, as described in the embodiment, the authentication information may be entered in or issued at the shop terminal 30, or entered in or issued at the payment server 20. If the authentication information is issued at the payment server 20, the authentication information may be issued according to a predetermined issuance rule. The issuance rule may include, for example, a function to generate random numbers.
   The payment server 20 of this variation includes an issuing unit 204 and a sending unit 205. These units are implemented mainly by the control unit 21. The issuing unit 204 issues authentication information of each shop. The issuing unit 204 issues authentication information of each shop based on the issuance rule such that pieces of authentication information of respective shops are different from one another. That is, the issuing unit 204 issues authentication information of each shop such that authentication information may not overlap between shops. For example, the issuing unit 204 may periodically issue authentication information, or issue authentication information when a shop logs in the payment server 20. For example, the issuing unit 204 generates random numbers based on a function included in the issuance rule, and issues authentication information including the random numbers. The issuing unit 204 may simply use the random number as authentication information, or add the random numbers to characters or numeric values specified by each shop to use as authentication information.
   The sending unit 205 sends authentication information issued by the issuing unit 204 to each shop. The authentication information may be sent by using various notification media. For example, the sending unit 205 may send the authentication information by using an e-mail, chat application, message application, and web site. If the web site is used, a shop-specific page that is displayed after each shop logs in the payment server 20 may be used.
   According to the variation (6), the payment server 20 issues the authentication information, and thus the authentication information can be periodically updated. By periodically updating the authentication information, the security can be improved. Further, each shop can save time and effort for issuing authentication information.
(7) For example, two or more of the above described variations may be combined.

For example, in this embodiment, the payment system S includes a customer terminal 10 operated by a customer and the payment server 20, and further includes a shop terminal 30 of each shop, although the payment system S may not include the shop terminals 30. That is, only the customer terminal 10 and the payment server 20 may be included in the payment system S, and the shop terminal 30 may be omitted. In this case, a payment of the customer can be completed even if the payee shop does not have a terminal. For example, in a mobile type shop or a flea market, even if a payee shop does not carry a terminal, a payment of a customer can be completed.

For example, the case has been described in which the message to prompt the payee shop to enter the authentication information is displayed on the authentication information input screen G4, although the authentication information input screen G4 may not displayed the message. For example, the authentication information input screen G4 may not particularly display the payee shop information and the payment amount. In this case, the payee shop enters the authentication information in the authentication information input screen G4 where the payee shop information and the payment amount are not displayed. If the payee shop wants to view the payee shop information and the payment amount, an operation to return to the previous screen may be performed. For example, a payment may be completed without a process in which a customer enters a payment amount. In this case, information of the payment amount may be entered from the shop terminal 30, and registered in the payment server 20 in advance. As another example, if a user uses a coupon to make a payment, coupon information of the customer stored in the customer terminal 10 or another computer may be used to make the payment.

For example, the payment processing may be executed by using not only a credit card or a deduction from a bank, but also an electronic value (e.g., electronic money and point). In this case, the customer terminal 10 may be provided with an IC chip in which the electronic value is recorded. The IC chip may include a control unit, a storage unit, and a communication unit, and the storage unit stores balance information of the electronic value and a program to change the balance information. The IC chip may change the balance information stored therein in response to an instruction from the payment server 20 or other server.

For example, the functions described as being implemented by the payment server 20 may be implemented by the customer terminal 10. For example, the authentication unit 201 may be implemented by the customer terminal 10. In this case, the authentication unit 201 may be implemented mainly by the control unit 11, and the payment server 20 may send encrypted authentication information. The authentication unit 201 may use a predetermined decoding key to decode the authentication information, and compares the decoded authentication information with the authentication information entered by the payee shop. For example, the payment execution unit 202 may be implemented by the customer terminal 10. In this case, the payment execution unit 202 may be implemented mainly by the control unit 11, and send a payment instruction to the payment server 20 or other server, thereby executing the payment processing. Alternatively, the payment execution unit 202 may execute the payment processing based on the payment information, such as a credit card number, stored in the customer terminal 10. For example, in the payment system S, the functions other than the data storage unit 200, the shop receiving unit 100, the authentication information receiving unit 103, the sending unit 104, the authentication unit 201, and the payment execution unit 202 may be omitted.

## Claims

1. A payment system comprising:
a customer terminal operated by a customer; and
a server, wherein
the server comprises storing means for storing each of a plurality of pieces of shop identification information in association with authentication information that is necessary for a payment,
wherein the customer terminal comprises:
shop receiving means for receiving a selection of a payee shop by the customer;
authentication information receiving means for receiving an input of the authentication information by the payee shop; and
sending means for sending shop identification information of the payee shop and the authentication information entered by the payee shop to the server,
the server further comprises authentication means for executing authentication processing based on authentication information received from the customer terminal and authentication information stored in association with the shop identification information received from the customer terminal,
the payment system comprises payment execution means for executing payment processing to the payee shop based on an authentication result of the authentication means.

2. The payment system according to claim 1, wherein
the customer terminal further comprises display control means for, when the customer selects the payee shop, displaying a message to prompt the payee shop to enter the authentication information on display means, and
when the message is displayed, the authentication information receiving means receives the input of the authentication information by the payee shop.

3. The payment system according to claim 1 or 2, wherein
the customer terminal further comprises display control means for, when the customer selects the payee shop, displaying payee shop information indicating the payee shop on display means, and
the authentication information receiving means receives the input of the authentication information by the payee shop while the payee shop information being displayed.

4. The payment system according to any one of claims 1 to 3, wherein
the customer terminal further comprises:
payment amount receiving means for receiving an input of a payment amount by the customer; and
display control means for displaying, on display means, the payment amount entered by the customer,
the authentication information receiving means receives the input of the authentication information by the payee shop while the payment amount being displayed, and
the payment processing is processing for paying the payment amount entered by the customer to the payee shop selected by the customer.

5. The payment system according to any one of claims 1 to 4, wherein
the customer terminal further comprises payment amount receiving means for receiving an input of a payment amount by the customer and an input of a payment amount by the payee shop,
the payment system further comprises determining means for determining whether the payment amount entered by the customer is matched with the payment amount entered by the payee shop, and
the payment execution means executes the payment processing further based on a determination result of the determining means.

6. The payment system according to any one of claims 1 to 5, wherein
the payment system further comprises a shop terminal of each shop,
the shop terminal of each shop and the server share authentication information of the shop by a first network, and
the sending means of the customer terminal sends the shop identification information and the authentication information entered by the payee shop by a second network that is different from the first network.

7. The payment system according to any one of claims 1 to 6, wherein
the customer terminal further comprises payment amount receiving means for receiving an input of a payment amount by the customer,
the sending means of the customer terminal further sends the payment amount entered by the customer to the server,
the payment system further comprises a shop terminal of each shop,
the shop terminal of each shop comprises:
payment amount receiving means for receiving an input of a payment amount by the shop;
authentication information receiving means for receiving an input of the authentication information by the shop; and
sending means for sending the payment amount and the authentication information each entered by the shop to the server,
the storing means of the server stores authentication information and a payment amount, which are received from the shop terminal of each shop, in association with shop identification information of the shop, and
the authentication means of the server executes authentication processing based on authentication information received from the customer terminal and authentication information stored in association with shop identification information and a payment amount that are received from the customer terminal.

8. The payment system according to claim 7, wherein
the server further comprises encrypting means for encrypting authentication information entered by a shop using a payment amount entered by the shop as a cryptographic key,
the storing means of the server stores the authentication information encrypted by the encrypting means, and
the authentication means of the server executes authentication processing by decoding the authentication information stored in association with shop identification information and the payment amount that are received from the customer terminal based on the payment amount.

9. The payment system according to any one of claims 1 to 8, wherein
each shop has an electronic stamp indicating authentication information of the shop,
the customer terminal comprises a touch panel,
the authentication information receiving means receives an input of the authentication information by a contact between an electronic stamp of the payee shop and the touch panel.

10. The payment system according to any one of claims 1 to 9, wherein
the server further comprises:
issuing means for issuing authentication information of each shop; and
sending means for sending authentication information issued by the issuing means to each shop.

11. A payment method based on a customer terminal operated by a customer and a server, comprising:
a shop receiving step of receiving, by the customer terminal, a selection of a payee shop by the customer;
an authentication information receiving step of receiving, by the customer terminal, an input of the authentication information by the payee shop;
a sending step of sending shop identification information of the payee shop and the authentication information entered by the payee shop to the server;
an authentication step of executing authentication processing based on authentication information received from the customer terminal and authentication information stored in association with the shop identification information received from the customer terminal; and
a payment execution step of executing payment processing to the payee shop based on an authentication result of the authentication step.

12. A program that causes a customer terminal or other computer to function as payment execution means for executing payment processing to a payee shop based on an authentication result of authentication processing, the authentication processing being based on authentication information stored in association with shop identification information of the payee shop selected by a customer on a customer terminal and authentication information entered by the payee shop in the customer terminal.
